# EUROPÄISCHE PATENTSCHRIFT

(11) **EP 4 392 755 B1**
(45) Veröffentlichungstag und Bekanntmachung des Hinweises auf die Patenterteilung: **29.01.2025**
(21) Anmeldenummer: 22782696.3
(22) Anmeldetag: 12.09.2022
(51) Int. Cl.: G01M 99/00, G01M 17/08, B61D 27/00

(54) **VERFAHREN UND TESTANORDNUNG ZUM TESTEN EINES KLIMAGERÄTS**
METHOD AND TEST ARRANGEMENT FOR TESTING AN AIR-CONDITIONING UNIT
PROCÉDÉ ET AGENCEMENT DE TEST POUR TESTER UNE UNITÉ DE CLIMATISATION

(30) Priorität: 30.09.2021 DE 102021211033; 13.01.2022 DE 102022200266
(43) Veröffentlichungstag der Anmeldung: 03.07.2024
(73) Patentinhaber: Siemens Mobility GmbH, 81739 München (DE)
(72) Erfinder: KASAP, Irfan, 44653 Herne (DE); SCHMITZ, Markus, 52379 Langerwehe (DE)
(74) Vertreter: Siemens Patent Attorneys
(86) Internationale Anmeldenummer: PCT/EP2022/075205
(87) Internationale Veröffentlichungsnummer: WO 2023/052102

(56) Entgegenhaltungen:
- EP-A2- 1 760 447
- WO-A1-2020/035798
- DE-A1- 102014 116 504

## Beschreibung

Die Erfindung betrifft ein Verfahren und eine Testanordnung zum Testen eines Klimageräts, welches zum Bereitstellen von klimatisierter Raumluft für ein Fahrzeug vorgesehen und während des Betriebs des Fahrzeugs einer Sonneneinstrahlung exponiert ist.

Grundsätzlich ist es bekannt, dass Fahrzeuge sowie Subsysteme und Komponenten der Fahrzeuge vor der Inbetriebnahme in vielerlei Hinsicht getestet werden. So wird beispielsweise der Einfluss von Kälte, Hitze, Schneefall, Wind, etc. auf Fahrzeuge vor der Inbetriebnahme getestet. Diese unterschiedlichen Formen der Witterung können künstlich hergestellt werden.

Aus der deutschen Gebrauchsmusterschrift DE 299 03 255 U1 ist ein ortsfester Klima-Wind-Kanal bekannt, in dem schienengebundene Fahrzeuge - u. a. mithilfe eines Wärmetauschers und eines Wasserinjektors im Luftstrom des Windkanals - einer klimatischen Simulation von Regen, Schnee, Licht und unterschiedlichen Temperaturen ausgesetzt werden können. Hierbei wird ein Schienenfahrzeug in den Klima-Wind-Kanal gefahren und das Schienenfahrzeug von außen mit dem gewünschten Klima wie Temperatur, Luftfeuchte, Sonnenstrahlung, Windgeschwindigkeit, etc. beaufschlagt.

EP 1 760 447 A2 beschreibt eine Klimakammer zur messtechnischen Erfassung des thermischen Komforts in einem Prüfobjekt und für witterungsabhängige Funktionsprüfungen an diesem Prüfobjekt. Die Klimakammer besteht aus Dämmelementen, die sich in einem Stützportal angeordnet reversibel auf- und wieder abbauen lassen und das Prüfobjekt umschließen. Ein Klimagerät bringt Luft in die Klimakammer ein bzw. wälzt Luft in der Klimakammer um, wobei über Wärmetauscher des Klimagerätes, über die die Luft geführt wird, die unterschiedlichen klimatischen Bedingungen eingestellt werden. Die Dämmelemente werden im Stützportal zusammengefügt und umschließen das zu untersuchende Prüfobjekt derartig, dass es von den Dämmelementen umgeben ist. Der Boden bleibt hierbei insbesondere unverändert, d.h. so wie er vor Zusammenbau der Dämmelemente war.

Vor diesem Hintergrund ist es Aufgabe der Erfindung, das Testen eines Klimageräts dieser Art zu verbessern.

Diese Aufgabe wird durch ein Verfahren zum Testen eines Klimageräts der eingangs genannten Art gelöst. Bei dem Verfahren wird Sonneneinstrahlung während des Tests mittels einer künstlichen Lichtquelle simuliert. Die künstliche Lichtquelle wird anhand eines Vortests eingestellt. Bei dem Vortest wird an einer repräsentativen Stelle des Klimageräts eine Testbestrahlung mit Licht durchgeführt. Dabei sind wärmetechnische Eigenschaften des Klimageräts an der repräsentativen Stelle vorbekannt.

Die Erfindung beruht auf der Erkenntnis, dass der Einfluss von Sonneneinstrahlung auf den Betrieb eines Klimageräts bei bisherigen Lösungen im Rahmen der Entwicklung bzw. Auslegung des Klimageräts häufig gar nicht oder auf Basis von vereinfachten theoretischen Annahmen ermittelt wird. Zudem findet in der Phase der Auslegung bzw. Entwicklung des Klimageräts in der Regel kein Test des Einflusses der Sonneneinstrahlung statt.

Gleichzeitig ist es mit hohem Aufwand und Dringlichkeit verbunden, wenn erst bei einem nachgelagerten Systemtest in einem Klima-Wind-Kanal oder gar erst im Betrieb des Fahrzeugs festgestellt wird, dass das Klimagerät die gewünschten Anforderungen nicht erfüllt. Denn in diesem Fall müsste das Klimagerät gegebenenfalls von dem Fahrzeug deinstalliert und Änderungen an dem Klimagerät vorgenommen werden, die den Gesamtprozess der Zulassung oder den Betrieb des Fahrzeugs verzögern.

Die erfindungsgemäße Lösung behebt dieses Problem, indem ein Verfahren zum Testen des Klimageräts geschaffen wird, welches vor dem Systemtest im Klima-Wind-Kanal durchgeführt werden kann. Für diesen vorgelagerten Test wird der Einfluss der Sonneneinstrahlung mittels einer künstlichen Lichtquelle simuliert. Um eine dem nachgelagerten Test im Klima-Wind-Kanal entsprechende Bestrahlungsstärke zu erreichen, wird die künstliche Lichtquelle eingestellt. Die Einstellung erfolgt anhand eines Vortests. Bei dem Vortest wird an einer repräsentativen Stelle des Klimageräts eine Testbestrahlung mit Licht durchgeführt, wobei wärmetechnische Eigenschaften des Klimageräts an der repräsentativen Stelle vorbekannt sind. Durch die bekannten wärmetechnischen Eigenschaften an der repräsentativen Stelle ist es möglich, die Testbestrahlung entsprechend einer für den Systemtest erwarteten Sonneneinstrahlung auszulegen und die Lichtquelle entsprechend einzustellen. Dadurch wird es möglich, den Einfluss von Sonneneinstrahlung auf die Arbeitsweise des Klimageräts bereits vor dem Systemtest im Klima-Wind-Kanal zu testen. Dieser Test kann beispielsweise bereits beim Lieferanten des Klimageräts erfolgen.

Das Klimagerät ist beispielsweise zum Bereitstellen von klimatisierter Raumluft für einen Innenraum des Fahrzeugs vorgesehen.

Vorzugsweise wird das Klimagerät für den Betrieb des Fahrzeugs auf dem Dach des Fahrzeugs angeordnet, wo es Sonneneinstrahlung exponiert ist.

Die künstliche Lichtquelle umfasst beispielsweise eine Lichtquelle, die ausgebildet ist, Infrarotstrahlung auszustrahlen. Beispielsweise umfasst die Lichtquelle einen Infrarotstrahler bzw. eine Infrarotlampe.

Die Formulierung, wonach "an einer repräsentativen Stelle des Klimageräts eine Testbestrahlung mit Licht durchgeführt wird, wobei wärmetechnische Eigenschaften des Klimageräts an der repräsentativen Stelle vorbekannt sind", ist dahingehend zu verstehen, dass als repräsentative Stelle eine Stelle des Klimageräts (insbesondere an der Oberfläche) ausgewählt wird, für die die wärmetechnischen Eigenschaften vorbekannt sind.

Gemäß einer bevorzugten Ausführungsform des erfindungsgemäßen Verfahrens wird bei der Testbestrahlung eine Referenztemperatur an der repräsentativen Stelle des Klimageräts eingestellt. Die Referenztemperatur repräsentiert eine Temperatur, die für einen dem Test nachgelagerten Einsatz des Klimageräts erwartet wird.

Der dem Test nachgelagerte Einsatz kann beispielsweise der vorstehend beschriebene Systemtest im Klima-Wind-Kanal und/oder ein weiterer nachgelagerter Test und/oder ein Einsatz des Klimageräts im Betrieb des Fahrzeugs sein.

Bei einer weiteren bevorzugten Ausführungsform des erfindungsgemäßen Verfahrens wird die Referenztemperatur zumindest anhand der wärmetechnischen Eigenschaften an der repräsentativen Stelle und anhand von Umgebungsbedingungen, die für den dem Test nachgelagerten Einsatz des Klimageräts erwartet werden, ermittelt.

Die Umgebungsbedingungen umfassen beispielsweise die erwarteten Umgebungstemperaturen, Windgeschwindigkeiten, Lichteinstrahlungen, die beispielsweise in einem für den nachgelagerten Test genutzten Klima-Wind-Kanal vorliegen.

Das Fahrzeug kann ein Fahrzeug beliebiger Art sein, bei dem während des Betriebs ein Einfluss von Sonneneinstrahlung auf das Klimagerät des Fahrzeugs zu berücksichtigen ist. Ein Beispiel für ein Fahrzeug dieser Art ist ein Bus, bei dem das Klimagerät auf dem Dach angeordnet ist.

Gemäß einer bevorzugten Ausführungsform des erfindungsgemäßen Verfahrens ist das Fahrzeug ein spurgebundenes Fahrzeug, insbesondere ein Schienenfahrzeug.

Beispielsweise ist das spurgebundene Fahrzeug ein Hochgeschwindigkeitszug des öffentlichen Personenfernverkehrs oder ein Regionalzug oder eine Stadtbahn, eine Straßenbahn bzw. eine U-Bahn des öffentlichen Personennahverkehrs. Das Schienenfahrzeug ist beispielsweise ein Triebzug.

Das erfindungsgemäße Verfahren ist besonders für die Anwendung bei spurgebundenen Fahrzeugen geeignet. Denn bei Fahrzeugen dieser Art sind die zugehörigen Klimageräte häufig auf dem Dach des spurgebundenen Fahrzeugs angeordnet und demnach besonders exponiert für Sonneneinstrahlung. Zudem sind die Anforderungen von Klimageräten für spurgebundene Fahrzeuge insbesondere hinsichtlich der Zuverlässigkeit der Klimageräte hoch.

Nach einer weiteren bevorzugten Ausführungsform des erfindungsgemäßen Verfahrens ist das Testen einem Systemtest in einem Klima-Wind-Kanal, bei dem das Klimageräts auf dem Fahrzeug installiert ist, vorgelagert.

Der Systemtest in dem Klima-Wind-Kanal erfolgt beispielsweise unter Einhaltung der Vorgaben der Normen DIN EN 14813, 13129 und/oder 14750.

Der Systemtest ist ein Beispiel für den vorstehend beschriebenen Einsatz des Klimageräts, für den die Umgebungsbedingungen bekannt sind und entsprechend bei der Ermittlung der vorstehend beschriebenen Referenztemperatur verwendet werden können. Denn die Umgebungsbedingungen sind durch die genannten Normen für den Systemtest im Klima-Wind-Kanal zumindest teilweise vorgegeben. So ist beispielsweise die Stärke der Sonneneinstrahlung, die in dem Systemtest simuliert wird, durch die genannten Normen vorgegeben.

Bei einer bevorzugten Weiterbildung umfasst das Testen einen Komponententest, bei dem das Klimagerät als Komponente des Fahrzeugs vor der Installation auf dem Fahrzeug getestet wird.

Der Komponententest hat den wesentlichen Vorteil, dass dieser bereits bei einem Lieferanten des Klimageräts (bevor dieses auf dem Fahrzeug installiert wird) durchgeführt werden kann. Auf diese Weise kann frühzeitig ermittelt werden, ob das Klimagerät gewünschte Anforderungen unter Berücksichtigung der Sonneneinstrahlung erfüllt.

Gemäß einer weiteren bevorzugten Ausführungsform des erfindungsgemäßen Verfahrens umfasst das Einstellen ein Variieren eines Abstands zwischen der Lichtquelle und dem Klimagerät und/oder einer elektrischen Aufnahmeleistung der Lichtquelle.

Dies sind zwei besonders geeignete und zweckmäßige Möglichkeiten, die Lichtquelle einzustellen. Mit wachsendem Abstand der Lichtquelle von dem Klimagerät nimmt die Strahlungsleistung pro Fläche (d. h. die Bestrahlungsstärke), die auf das Klimagerät trifft, ab. Die von der Lichtquelle emittierte Strahlungsleistung nimmt mit wachsender elektrischer Aufnahmeleistung der Lichtquelle zu.

Bei einer weiteren bevorzugten Ausführungsform des erfindungsgemäßen Verfahrens, umfassen die wärmetechnischen Eigenschaften einen Wärmedurchgangskoeffizienten an der repräsentativen Stelle.

Auf diese Weise ist ermittelbar, wie die von der Sonneneinstrahlung stammende und von dem Klimagerät absorbierte Wärme in das Klimagerät abgeleitet wird. Die Ableitung der Wärme hat Einfluss auf die Temperatur an der Oberfläche des Klimageräts. Auf diese Weise kann die Temperatur an der Oberfläche bei der repräsentativen Stelle unter vorgegebenen Bedingungen - wie etwa der Umgebungstemperatur, Windgeschwindigkeit, Lichteinstrahlung, welche in einem für den Systemtest genutzten Klima-Wind-Kanal vorliegen - berechnet werden. In dieser Hinsicht unterscheidet sich die repräsentative Stelle von anderen Stellen des Klimageräts, an denen die Ableitung von Wärme an der Oberfläche beispielsweise aufgrund von Wärmebrücken nicht exakt berechnet werden kann.

Die eingangs genannte Aufgabe wird ferner gelöst durch eine Testanordnung zum Testen des Klimageräts der eingangs genannten Art. Die Testanordnung umfasst eine künstliche Lichtquelle, welche eingerichtet ist, die Sonneneinstrahlung während des Tests zu simulieren. Dabei weist das Klimagerät eine repräsentative Stelle auf, an der wärmetechnische Eigenschaften des Klimageräts vorbekannt sind. Die künstliche Lichtquelle ist anhand eines Vortests einstellbar, bei welchem an der repräsentativen Stelle des Klimageräts eine Testbestrahlung mit Licht durchführbar ist.

Zu Vorteilen, Ausführungsformen und Ausgestaltungsdetails der erfindungsgemäßen Testanordnung kann auf die vorstehende Beschreibung zu den entsprechenden Merkmalen des erfindungsgemäßen Verfahrens verwiesen werden.

Ein Ausführungsbeispiel der Erfindung wird anhand der Zeichnungen erläutert. Es zeigen:
- Figur 1: schematisch den Aufbau eines Ausführungsbeispiels einer erfindungsgemäßen Testanordnung für einen Vortest,
- Figur 2: schematisch den Aufbau eines Ausführungsbeispiels einer erfindungsgemäßen Testanordnung für einen Komponententest,
- Figur 3: schematisch den Aufbau eines Ausführungsbeispiels einer erfindungsgemäßen Testanordnung für einen Systemtest und
- Figur 4: schematisch den Ablauf eines Ausführungsbeispiels eines erfindungsgemäßen Verfahrens.

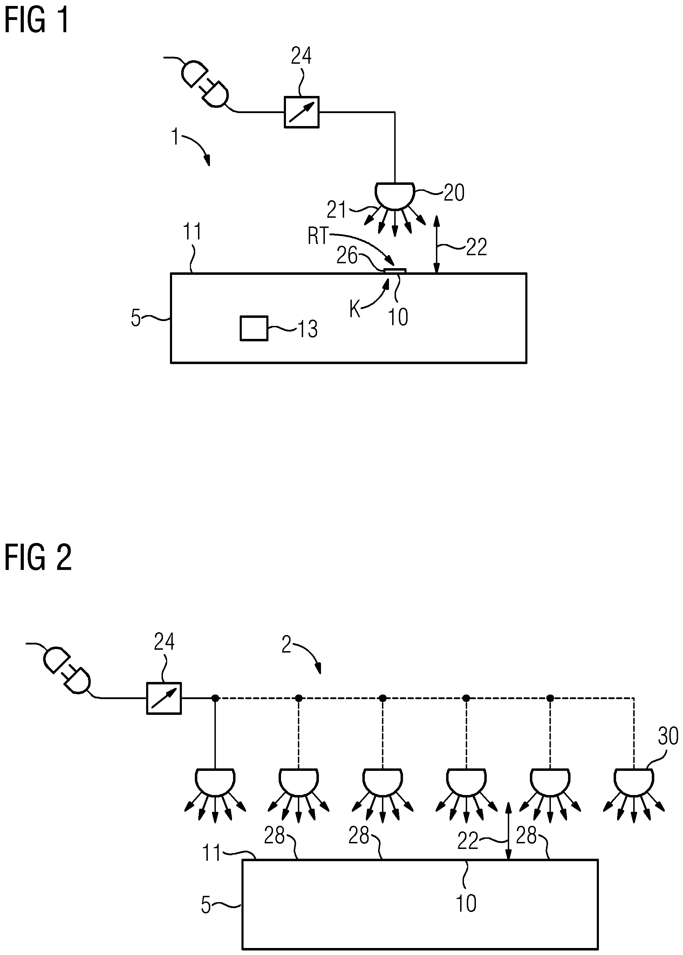

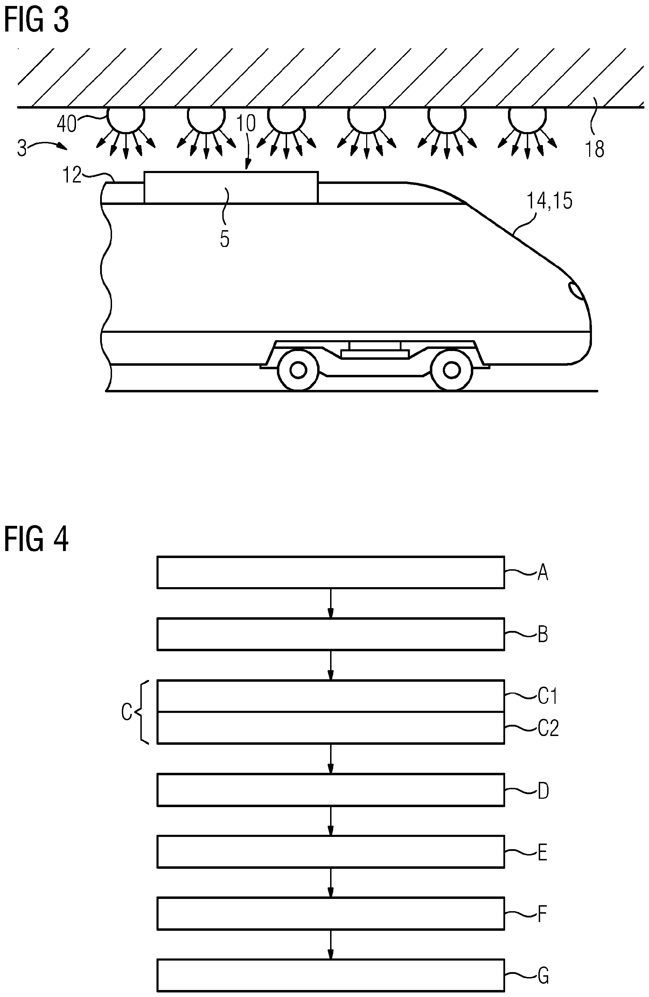

Figur 1 zeigt eine Testanordnung 1 für einen Vortest. Figur 2 zeigt eine Testanordnung 2 für einen Komponententest. Figur 3 zeigt eine Testanordnung 3 für einen Systemtest. Figur 4 zeigt ein schematisches Ablaufdiagramm, welches Verfahrensschritte gemäß dem Ausführungsbeispiel des erfindungsgemäßen Verfahrens repräsentiert.

Ein in den Figuren 1 bis 3 gezeigtes Klimagerät 5 ist zum Bereitstellen von klimatisierter Raumluft für einen Innenraum eines Fahrzeugs 14 (Figur 3) eingerichtet. Das Klimagerät 5 ist während des Betriebs des Fahrzeugs 14 einer Sonneneinstrahlung ausgesetzt (exponiert).

Die Testanordnung 1 ist für den Vortest des Klimageräts 5 vorgesehen. Dafür wird in einem Verfahrensschritt A eine repräsentative Stelle 10 an der Oberfläche 11 des Klimageräts 5 gewählt. Für diese repräsentative Stelle 10 sind wärmetechnische Eigenschaften aufgrund des Aufbaus des Klimageräts 5 vorbekannt. Beispielsweise ist ein Wärmedurchgangskoeffizient K für die repräsentative Stelle 10 bekannt. Dementsprechend ist bekannt, in welchem Umfang Wärme, die beispielsweise durch Sonneneinstrahlung an das Klimagerät 5 abgegeben wird, in das Klimagerät 5 abgeleitet wird.

Die Figuren 1 bis 3 zeigen insbesondere eine schematische Seitenansicht des Klimageräts 5, wobei die repräsentative Stelle 10 an der oberen Fläche gewählt wird. Ergänzend wird eine weitere repräsentative Stelle 13 an der Seite des Klimageräts 5 gewählt. Im Folgenden wird das Ausführungsbeispiel des erfindungsgemäßen Verfahrens und der erfindungsgemäßen Testanordnung anhand der repräsentativen Stelle 10 beschrieben. Das beschriebene Verfahren und die Testanordnung lassen sich jedoch sinnfällig auf die seitliche repräsentative Stelle übertragen.

In einem Verfahrensschritt B wird eine Referenztemperatur RT, welche an der Oberfläche 11 des Klimageräts 5 an der repräsentativen Stelle 10 eingenommen wird, berechnet. Die Referenztemperatur RT repräsentiert eine Temperatur, die bei einem nachgelagerten Einsatz des Klimageräts an der repräsentativen Stelle 10 erwartet wird. Der Einsatz ist beispielsweise der Systemtest oder ein Einsatz im Betrieb des Fahrzeugs 14. Dabei sind beispielsweise - neben den wärmetechnischen Eigenschaften des Klimageräts 5 an der repräsentativen Stelle 10 - die erwarteten Umgebungstemperaturen, Windgeschwindigkeiten, Lichteinstrahlungen, die beispielsweise in einem für den Systemtest genutzten Klima-Wind-Kanal 18 vorliegen werden, bekannt. Anhand dieser Informationen lässt sich wärmetechnisch berechnen, welche Temperatur RT beispielsweise bei dem nachgelagerten Systemtest (unter bestimmten Bedingungen) an der repräsentativen Stelle 10 zu erwarten ist. Es lassen sich zudem mehrere unterschiedliche Referenztemperaturen RT für unterschiedlichen erwartete Bedingungen, die beispielsweise bei dem nachgelagerten Systemtest zu erwarten sind, berechnen. Diese unterschiedlichen Referenztemperaturen RT können beispielsweise Gegenstand einer Testreihe bei dem Systemtest sein.

Der Systemtest ist in Figur 3 schematisch dargestellt. Dabei ist das Klimagerät 5 auf dem Dach 12 eines Fahrzeugs 14, welches ein spurgebundenes Fahrzeug 15 ist, installiert.

In einem Verfahrensschritt C wird eine für den Vortest verwendete künstliche Lichtquelle 20 (z. B. ein Infrarotstrahler, welcher Infrarotstrahlung 21 ausstrahlt) eingestellt. Ziel der Einstellung ist es, die Referenztemperatur RT an der repräsentativen Stelle 10 einzustellen. Dazu wird in einem Verfahrensschritt C1 der Abstand 22 zwischen der Lichtquelle 20 und dem Klimagerät 5 variiert, um auf diese Weise die Bestrahlungsstärke (Strahlungsleistung pro Fläche) anzupassen. Alternativ oder zusätzlich wird in einem Verfahrensschritt C2 die elektrische Aufnahmeleistung 24 der Lichtquelle 20 variiert, um auf diese Weise die von der Lichtquelle 20 ausgestrahlte Strahlungsleistung anzupassen. Durch diese Einstellungen (Variationen) wird die Temperatur an der Oberfläche der repräsentativen Stelle 10 angepasst, wobei die Anpassung unter Verwendung eines Temperatursensors 26 überwacht werden kann.

Die auf diese Weise im Rahmen des Vortests ermittelte Einstellung kann nun auf den Komponententest (Figur 2) übertragen werden. Dabei werden die ermittelten Einstellungen in einem Verfahrensschritt D auf weitere Flächen 28 des Klimageräts 5, übertragen. D. h. für den Komponententest werden mehrere Lichtquellen 30, die jeweils wie die Lichtquelle 20 aufgebaut sind, entsprechend den im Vortest ermittelten Einstellungen (vgl. Verfahrensschritte C1 und C2) angeordnet und mit elektrischer Leistung versorgt. Dadurch wird auf die weiteren Flächen die gleiche Bestrahlungsstärke wie die im Vortest eingestellte Bestrahlungsstärke an der repräsentativen Stelle eingestrahlt.

Mit diesen eingestellten Lichtquellen 30 wird in einem Verfahrensschritt E der Komponententest durchgeführt. Dabei wird das Klimagerät 5 betrieben und der Einfluss der Strahlung auf das Klimagerät 5 getestet. Mit anderen Worten: Die Sonneneinstrahlung wird während des Tests E mittels der künstlichen Lichtquellen 30 simuliert.

In einem Verfahrensschritt F wird das Klimagerät 5 auf dem Fahrzeug 14 installiert. Nach dieser Installation kann ein Systemtest gemäß einem Verfahrensschritt G erfolgen. Bei dem Systemtest ist das Klimagerät 5 auf dem Dach 12 Fahrzeugs 14 installiert. Das Fahrzeug 14 wird in den Klima-Wind-Kanal 18 verbracht (z. B. gefahren) und der Einfluss von Kälte, Hitze, Schneefall, Wind, etc. auf das Fahrzeug 14 getestet. Dabei wird beispielsweise auch der Einfluss der Sonneneinstrahlung getestet. Die Sonneneinstrahlung wird durch die Lichtquellen 40 des Klima-Wind-Kanals 18 simuliert.

## Patentansprüche

1. Verfahren zum Testen eines Klimageräts (5), welches
- zum Bereitstellen von klimatisierter Raumluft für ein Fahrzeug (14) vorgesehen ist und
- während des Betriebs des Fahrzeugs (14) einer Sonneneinstrahlung exponiert ist,
**dadurch gekennzeichnet, dass**
- die Sonneneinstrahlung während des Tests (E) mittels einer künstlichen Lichtquelle (30) simuliert wird,
- die künstliche Lichtquelle (30) anhand eines Vortests eingestellt wird (C), bei welchem an einer repräsentativen Stelle (10) des Klimageräts (5) eine Testbestrahlung mit Licht (21) durchgeführt wird,
wobei wärmetechnische Eigenschaften (K) des Klimageräts (5) an der repräsentativen Stelle (10) vorbekannt sind.

2. Verfahren nach Anspruch 1,
bei welchem
bei der Testbestrahlung eine Referenztemperatur (RT) an der repräsentativen Stelle (10) des Klimageräts (5) eingestellt wird und
die Referenztemperatur (RT) eine Temperatur repräsentiert, die für einen dem Test (E) nachgelagerten Einsatz des Klimageräts (5) erwartet wird.

3. Verfahren nach Anspruch 2,
bei welchem
die Referenztemperatur zumindest anhand der wärmetechnischen Eigenschaften (K) an der repräsentativen Stelle (10) und anhand von Umgebungsbedingungen, die für den dem Test (E) nachgelagerten Einsatz des Klimageräts (5) erwartet werden, ermittelt wird.

4. Verfahren nach wenigstens einem der vorhergehenden Ansprüche,
bei welchem
das Fahrzeug (14) ein spurgebundenes Fahrzeug (15), insbesondere ein Schienenfahrzeug, ist.

5. Verfahren nach wenigstens einem der vorhergehenden Ansprüche,
bei welchem
das Testen (E) einem Systemtest (F) in einem Klima-Wind-Kanal (18), bei dem das Klimagerät (5) auf dem Fahrzeug (14) installiert ist, vorgelagert ist.

6. Verfahren nach Anspruch 5,
bei welchem
das Testen (E) einen Komponententest umfasst, bei dem das Klimagerät (5) als Komponente des Fahrzeugs (14) vor der Installation auf dem Fahrzeug (14) getestet wird.

7. Verfahren nach wenigstens einem der vorhergehenden Ansprüche,
bei welchem
das Einstellen (C) ein Variieren (C1, C2)
- eines Abstands (22) zwischen der Lichtquelle (20) und dem Klimagerät (5) und/oder
- einer elektrischen Aufnahmeleistung (24) der Lichtquelle (20)
umfasst.

8. Verfahren nach wenigstens einem der vorhergehenden Ansprüche,
bei welchem
die wärmetechnischen Eigenschaften einen Wärmedurchgangskoeffizienten (K) an der repräsentativen Stelle umfassen.

9. Testanordnung zum Testen eines Klimageräts (5), welches
- zum Bereitstellen von klimatisierter Raumluft für ein Fahrzeug (14) vorgesehen ist und
- während des Betriebs des Fahrzeugs (14) einer Sonneneinstrahlung exponiert ist,
**gekennzeichnet durch**:
- eine künstliche Lichtquelle (30), welche eingerichtet ist, die Sonneneinstrahlung während des Tests zu simulieren,
wobei das Klimagerät (5) eine repräsentative Stelle (10) aufweist, an der wärmetechnische Eigenschaften (K) des Klimageräts (5) vorbekannt sind, und
wobei die künstliche Lichtquelle (30) anhand eines Vortests einstellbar ist, bei welchem an der repräsentativen Stelle (10) des Klimageräts (5) eine Testbestrahlung mit Licht (21) durchführbar ist.

## Claims

1. Method for testing an air-conditioning unit (5) which
- is intended to provide conditioned ambient air for a vehicle (14) and
- is exposed to solar radiation during the operation of the vehicle (14),
**characterised in that**
- the solar radiation is simulated by means of an artificial light source (30) during the test (E),
- the artificial light source (30) is set on the basis of a preliminary test (C) during which test irradiation with light (21) is performed at a representative location (10) of the air-conditioning unit (5),
wherein thermal properties (K) of the air-conditioning unit (5) at the representative location (10) are known in advance.

2. Method according to claim 1
in which
during the test irradiation, a reference temperature (RT) is set at the representative location (10) of the air-conditioning unit (5) and
the reference temperature (RT) represents a temperature that is expected for the use of the air-conditioning unit (5) downstream of the test (E).

3. Method according to claim 2
in which
the reference temperature is ascertained at least on the basis of the thermal properties (K) at the representative location (10) and on the basis of ambient conditions that are expected for the use of the air-conditioning unit (5) downstream of the test (E).

4. Method according to at least one of the preceding claims in which
the vehicle (14) is a track-bound vehicle (15), in particular a rail vehicle.

5. Method according to at least one of the preceding claims in which
the testing (E) is performed upstream of a system test (F) in a climatic wind tunnel (18) in which the air-conditioning unit (5) is installed on the vehicle (14).

6. Method according to claim 5
in which
the testing (E) comprises a component test in which the air-conditioning unit (5) is tested as a component of the vehicle (14) prior to installation on the vehicle (14).

7. Method according to at least one of the preceding claims in which
setting (C) comprises varying (C1, C2)
- a distance (22) between the light source (20) and the air-conditioning unit (5) and/or
- an electrical input power (24) of the light source (20).

8. Method according to at least one of the preceding claims in which
the thermal properties comprise a heat transfer coefficient (K) at the representative location.

9. Test arrangement for testing an air-conditioning unit (5) which
- is intended to provide conditioned ambient air for a vehicle (14) and
- is exposed to solar radiation during the operation of the vehicle (14),
comprising:
- an artificial light source (30) which is configured to simulate solar radiation during the test,
wherein the air-conditioning unit (5) has a representative location (10) at which the thermal properties (K) of the air-conditioning unit (5) are known in advance, and
wherein the artificial light source (30) can be set on the basis of a preliminary test in which test irradiation with light (21) can be performed at the representative location (10) of the air-conditioning unit (5).

## Revendications

1. Procédé de test d'un appareil (5) de conditionnement d'air, qui
- est prévu pour disposer d'air ambiant climatisé pour un véhicule (14) et
- est exposé pendant le fonctionnement du véhicule (14) à un rayonnement solaire,
**caractérisé en ce que**
- on simule le rayonnement solaire pendant le test (E) au moyen d'une source (30) lumineuse artificielle,
- on règle (C) la source (30) lumineuse artificielle à l'aide d'un test préalable, dans lequel on effectue, en un point (10) représentatif de l'appareil (5) de conditionnement d'air, un rayonnement de test par de la lumière (21),
dans lequel des propriétés (K) de la technique de la chaleur de l'appareil (5) de conditionnement d'air sont connues à l'avance au point (10) représentatif.

2. Procédé suivant la revendication 1,
dans lequel,
lors du rayonnement de test, on règle une température (RT) de référence au point (10) représentatif de l'appareil (5) de conditionnement d'air, et
la température (RT) de référence représente une température à laquelle on s'attend pour l'utilisation à la suite du test (E) de l'appareil (5) de conditionnement d'air.

3. Procédé suivant la revendication 2,
dans lequel
on détermine la température de référence, au moins à l'aide des propriétés (K) en technique de la chaleur au point (10) représentatif et à l'aide de conditions ambiantes, auxquelles on s'attend pour l'utilisation à venir après le test (E) de l'appareil (5) de conditionnement d'air.

4. Procédé suivant au moins l'une des revendications précédentes,
dans lequel
le véhicule (14) est un véhicule (15) guidé sur rail, notamment un véhicule ferroviaire.

5. Procédé suivant au moins l'une des revendications précédentes,
dans lequel
le test (E) est effectué en amont d'un test (F) de système dans un canal (18) de vent de conditionnement d'air, dans lequel l'appareil (5) de conditionnement d'air est monté sur le véhicule (14).

6. Procédé suivant la revendication 5,
dans lequel
le test (E) comprend un test de composant, dans lequel on teste l'appareil (5) de conditionnement d'air, comme composant du véhicule (14), avant le montage sur le véhicule (14).

7. Procédé suivant au moins l'une des revendications précédentes,
dans lequel
le réglage (C) comprend une variation (C1, C2)
- d'une distance (22) entre la source (20) lumineuse et l'appareil (5) de conditionnement d'air et/ou
- d'une puissance (24) électrique absorbée de la source (20) lumineuse.

8. Procédé suivant au moins l'une des revendications précédentes,
dans lequel
les propriétés de la technique de la chaleur comprennent un coefficient (K) de transmission de la chaleur au point représentatif.

9. Agencement de test pour tester un appareil (5) de conditionnement d'air, qui
- est prévu pour disposer d'air ambiant climatisé pour un véhicule (14) et
- est exposé pendant le fonctionnement du véhicule (14) à un rayonnement solaire,
**caractérisé par**
- une source (30) lumineuse artificielle, qui est agencée pour simuler le rayonnement solaire pendant le test,
dans lequel l'appareil (5) de conditionnement a un point (10) représentatif, où des propriétés (K) de la technique de la chaleur de l'appareil (5) de conditionnement d'air sont connues à l'avance, et
dans lequel la source (30) lumineuse artificielle est réglable à l'aide d'un test préalable, dans lequel on effectue, au point (10) représentatif de l'appareil (5) de conditionnement d'air, un rayonnement de test par de la lumière (21).
